# EUROPÄISCHE PATENTSCHRIFT

(11) **EP 0 927 505 B1**
(45) Veröffentlichungstag und Bekanntmachung des Hinweises auf die Patenterteilung: **13.12.2000**
(21) Anmeldenummer: 97931758.3
(22) Anmeldetag: 03.07.1997
(51) Int. Cl.: H05B 6/02, H05B 6/40, C21D 1/10, C21D 9/30

(54) **VORRICHTUNG ZUM UMLAUFENDEN UND GLEICHZEITIG ERFOLGENDEN ELEKTROINDUKTIVEN HÄRTEN**
DEVICE FOR ROTATING AND SIMULTANEOUS HARDENING BY ELECTRIC INDUCTION
DISPOSITIF DE DURCISSEMENT TOURNANT ET SIMULTANE PAR INDUCTION ELECTRIQUE

(30) Priorität: 18.09.1996 DE 19638008
(43) Veröffentlichungstag der Anmeldung: 07.07.1999
(73) Patentinhaber: ELOTHERM GmbH, D-42855 Remscheid (DE)
(72) Erfinder: GEZARZICK, Waldemar, D-42857 Remscheid (DE); VON STARCK, Axel, D-42859 Remscheid (DE)
(74) Vertreter: Simons, Johannes
(86) Internationale Anmeldenummer: EP9703507
(87) Internationale Veröffentlichungsnummer: WO9812900

(56) Entgegenhaltungen:
- DE-A- 4 001 887
- DE-C- 3 617 468
- FR-A- 1 125 965
- US-A- 5 451 749

## Beschreibung

Die Erfindung betrifft eine Vorrichtung zum umlaufenden und gleichzeitig erfolgenden elektroinduktiven Härten der Lagerflächen von unmittelbar nebeneinander und in Achsrichtung versetzt zueinander angeordneten Hubzapfen einer Kurbelwelle mit die Hubzapfen jeweils um höchstens 180° umgreifenden Induktoren, welche jeweils mindestens zwei parallel angeordnete, der Krümmung der Lagerflächen folgende Induktoräste aufweisen, von denen einer dem Überdeckungsbereich der Hubzapfen und der andere dem jeweils anderen Randbereich des ihm zugeordneten Hubzapfens zugeordnet ist, wobei die Induktoräste jedes Induktors in Achsrichtung einen gegenüber der Hälfte der Gesamtbreite der Hubzapfen vergrößerten Abstand voneinander aufweisen.

Bei Kurbelwellen mit unmittelbar nebeneinander und versetzt angeordneten Hubzapfen, in der Fachsprache auch "Split-Pin-Kurbelwellen" genannt, besteht das grundsätzliche Problem, daß bei einer einzeln erfolgenden Härtung jeder Lagerfläche die zuvor gehärtete, unmittelbar benachbarte Lagerfläche durch die Erwärmung der nachfolgend gehärteten Lagerfläche angelassen wird. Aus diesem Grund ist beispielsweise in der deutschen Patentschrift DE 42 36 921 C1 vorgeschlagen worden, die Härtung der unmittelbar benachbart angeordneten Lagerfläche einer Split-Pin-Kurbelwelle gleichzeitig vorzunehmen. Jedem Hubzapfen ist dabei ein Induktor zugeordnet, wobei die Induktoren im wesentlichen diametral gegenüberliegend angeordnet sind. Diese diametral gegenüberliegende, versetzte Anordnung hat den Vorteil, daß der auf beiden Seiten der Kurbelwelle zur Verfügung stehende Raum für das Anordnen von Versorgungs- und Steuereinrichtungen für den Betrieb der Induktoren genutzt werden kann. Ein weiterer Vorteil der diametral entgegengesetzten Anordnung der Induktoren besteht darin, daß es auf diese Weise möglich ist, die Breite der einzelnen Induktoren, d. h. den Abstand zwischen den Induktor-Ästen, so zu wählen, daß die Summe der Breite zweier Induktoren größer ist als die Gesamtbreite zweier zu härtender Lagerflächen. Durch die radial entgegengesetzte Anordnung ist sichergestellt, daß die Induktoren trotz ihrer durch die vergrößerte Breite bedingte Überlappung in Achsrichtung bei einem Umlauf der Kurbelwelle nicht zusammenstoßen.

Ein weiteres Problem beim elektroinduktiven Härten von unmittelbar benachbart angeordneten Lagerflächen einer Kurbelwelle besteht darin, daß in der Regel seitlich der unmittelbar nebeneinander angeordneten Hubzapfen Wangen ausgebildet sind, die ein größeres Materialvolumen aufweisen als die zwischen ihnen angeordneten Hubzapfen.

Durch die Materialanhäufung im Bereich der Wangen kommt es bei der Erwärmung der Lagerflächen zu einem Wärmeabfall im Bereich der den Wangen zugeordneten Randbereiche der Lagerflächen. Zur Beseitigung dieses Problems ist in der deutschen Patentanmeldung 195 30 430 vorgeschlagen worden, denjenigen Induktorast der Induktoren, der dem wangenseitigen Randbereich der zu härtenden Lagerfläche zugeordnet ist, länger auszubilden als den Induktorast, der im Überdeckungsbereich der Hubzapf angeordnet ist. Auf diese Weise wird eine gleichmäßige Temperaturverteilung bei der elektroinduktiven Erwärmung der Lagerflächen erreicht.

Die voranstehend erläuterten Vorrichtungen haben sich bei ihrer praktischen Erprobung bewährt. Es hat sich jedoch gezeigt, daß es eines erheblichen technischen Aufwandes bedarf, um die diametral gegenüberliegend angeordneten Induktoren in einer Weise zu führen und in Anlage an die zu härtende Lagerfläche zu halten, daß auf der einen Seite eine Beschädigung der Lagerfläche ausgeschlossen ist und auf der anderen Seite die für eine wirkungsvolle Erwärmung der Lagerfläche notwendige enge elektroinduktive Verkopplung von Induktor und Lagerfläche gewährleistet ist.

Ein Beispiel für den hohen technischen Aufwand, welcher für eine ausreichend genaue Führung der seitlich gegenüberliegend auf die zu härtende Fläche zugestellten Induktoren getrieben werden muß, gibt die DE 36 17 468 C1. Bei diesem Stand der Technik sind die versetzt gegenüberliegend senkrecht zur Drehachse der Kurbelwelle angeordneten Induktoren mit einer gemeinschaftlichen Aufhängung versehen, welche aus parallel angeordneten, beweglichen Hebeln besteht. Gleichzeitig sind sie mit einer Führungseinrichtung verbunden, die ihre geometrische Lage zueinander während des Umlaufs der Hubzapfen aufrecht erhält.

Der Aufwand für die Führung der Induktoren konnte auch dadurch nicht gemindert werden, daß, wie aus der Praxis ebenfalls bekannt, durch eine entsprechende Umgestaltung der elektrischen Versorgungselemente das gemeinsame Zuführen der Induktorgehäuse aus einer Richtung von oben ermöglicht wurde. Auch bei diesen von oben zugestellten Induktoren war es erforderlich, die bei der Wärmeerzeugung wirksamen Induktoräste jeweils im wesentlichen diametral gegenüberliegend anzuordnen, um ihr Zusammenstoßen bei einem Umlauf der Kurbelwelle zu vermeiden.

Die Aufgabe der Erfindung besteht darin, eine Vorrichtung der eingangs genannten Art zu schaffen, bei der der für die Führung der Induktoren erforderliche technische Aufwand vermindert ist und die gleichzeitig ein optimales Erwärmungs- und Härteergebnis sicherstellt.

Diese Aufgabe wird erfindungsgemäß dadurch gelöst,
- daß die Induktoren die Hubzapfen im wesentlichen aus der selben Richtung umgreifen und
- daß der Bereich vergrößerten Abstands der Induktoräste jedes Induktors jeweils auf denjenigen Abschnitt des dem Überdeckungsbereich zugeordneten Induktorastes beschränkt ist, der den entsprechenden Abschnitt des dem Überdeckungsbereich zugeordneten Induktorastes des jeweils anderen Induktors in keiner Umlaufstellung der Kurbelwelle durchdringt oder überstreicht.

Gemäß der Erfindung umgreifen die Induktoräste die ihnen zugeordneten Lagerflächen aus derselben Richtung. Dies bedeutet, daß die für die Erwärmung wirksamen Induktoräste gemeinsam mit dem Induktorgehäuse aus einer Richtung auf die zu härtende Lagerfläche zugestellt werden und unmittelbar benachbart angeordnet im auf die Lagerflächen aufgesetzten Zustand die Lagerflächen aus derselben Richtung umgreifen. Auf diese Weise können aufwendige Mechanismen zum diametral entgegengesetzten Anlegen der Induktoräste an die Lagerfläche entfallen. Gleichzeitig kann das Eigengewicht der Induktoren ausgenutzt werden, um die für das ordnungsgemäße Aufsitzen der Induktoren auf den Lagerflächen erforderliche Kraft zu erzeugen, wobei die tatsächlich aufgebrachte Anlagekraft durch einfache Mittel, beispielsweise durch federnde Elemente dosiert werden kann.

Dadurch, daß die Induktoräste jedes Induktors erfindungsgemäß nur über einem bestimmten Abschnitt einer bezüglich der Breite der zu härtenden Lagerfläche vergrößerten Abstand aufweisen, ist zusätzlich sichergestellt, daß die Induktoren trotz ihrer eng benachbarten, nebeneinander liegenden Anordnung bei einem Umlauf der Kurbelwelle nicht zusammenstoßen. Dabei sind die Grenzen des Abschnitts des vergrößerten Abstands, d. h., der Bereich, in dem eine Überlappung der Induktoräste in Achsrichtung stattfindet, durch die Enden desjenigen Abschnitts des dem Überdeckungsbereich zugeordneten Induktorastes festgelegt, zwischen dem und dem entsprechenden Abschnitt des dem Überdeckungsbereich zugeordneten Induktorastes des jeweils anderen Induktors es in Achsrichtung der Kurbelwelle gesehen während eines Kurbelwellenumlaufs zu keiner Begegnung kommt.

Die Beschränkung der Zone, in der sich die dem Überdeckungsbereich der Hubzapfen zugeordneten Induktoräste der Induktoren in Achsrichtung der Kurbelwelle überlappen, ermöglicht es jedoch nicht nur, die Induktoren ohne die Gefahr einer Kollision in der erfindungsgemäßen Weise aus derselben Richtung auf die Lagerflächen einwirken zu lassen. Diese Beschränkung trägt auch dem Umstand Rechnung, daß die dem Überdeckungsbereich zugeführte Wärme geringer sein muß als die Wärmemenge, die dem anderen, in der Regel einer Wange zugeordneten Randbereich der Lagerfläche, zugeführt werden muß. Auf diese Weise können durch die erfindungsgemäße Ausgestaltung der Induktoren Schäden durch Überhitzung der zu härtenden Lagerflächen sicher vermieden werden.

Zusätzlich kann das Erfordernis der Einleitung unterschiedlich großer Wärmemengen in die verschiedenen Bereiche der zu härtenden Lagerfläche dadurch erfüllt werden, daß der dem Überdeckungsbereich zugeordnete Induktorast eine geringere Länge aufweist, als der andere Induktorast der Induktoren. Alternativ oder ergänzend zu dieser Maßnahme ist es möglich, unterschiedliche Wärmemengen in den Überdeckungsbereich und den anderen Randbereich der Lagerfläche dadurch einzuleiten, daß der dem Überdeckungsbereich zugeordnete Induktorast in dem Bereich, in dem er einen geringeren Abstand zu dem anderen Induktorast des Induktors aufweist, wirkungslos ist.

Grundsätzlich ist es auch möglich, den dem Überdeckungsbereich zugeordneten Induktorast im wesentlichen nur in dem Abschnitt vergrößerten Abstands auszubilden.

Günstig ist es auch, wenn jedem freien Ende der Induktoräste ein Gleitschuh zugeordnet ist. Über derartige Abstützelemente ist es besonders einfach möglich, den jeweiligen Induktor auf der zu härtenden Lagerfläche abzustützen, ohne daß dabei die Gefahr einer Beschädigung der Lagerfläche entsteht.

Hinsichtlich der Konstruktion erfindungsgemäß ausgestalteter Vorrichtungen ist es günstig, wenn mindestens einer der Induktoräste, vorzugsweise jedoch beide Induktoräste jedes Induktors geteilt sind. Dies ermöglicht nicht nur eine optimale Zu- und Abführung der elektrischen Verbindungsleitungen, sondern es macht es zusätzlich möglich, zwischen den Teilabschnitten der Induktoren mindestens einen Gleitschuh anzuordnen.

Nachfolgend wird die Erfindung anhand einer ein Auführungsbeispiel darstellenden Zeichnung näher erläutert. Es zeigen:

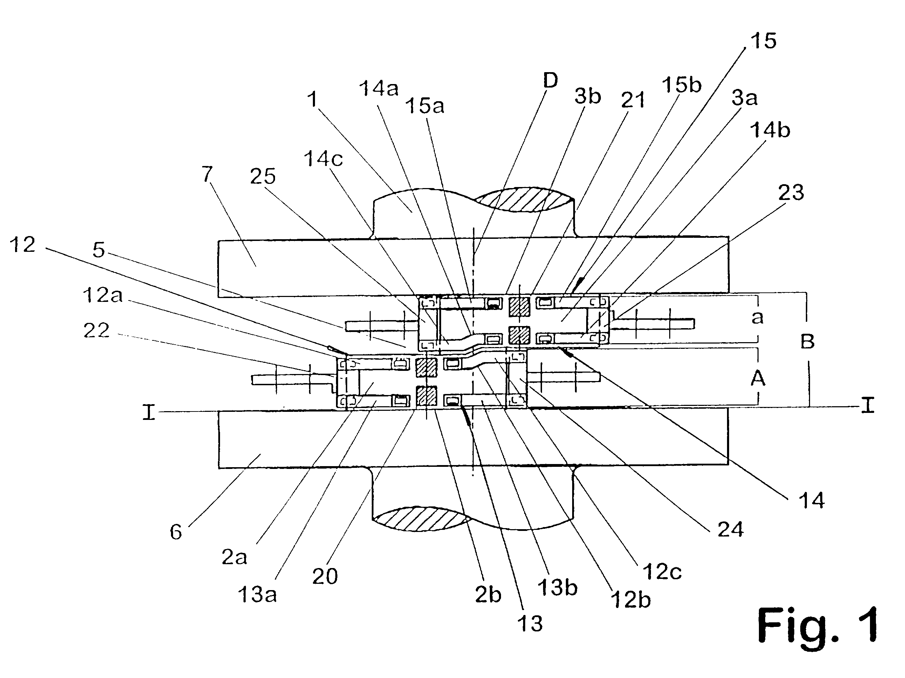

- Fig. 1: eine erste Betriebsstellung einer Kurbelwelle während des Erwärmens in einer Vorrichtung zum Härten ihrer Lagerfläche in einer ausschnittsweisen Draufsicht;

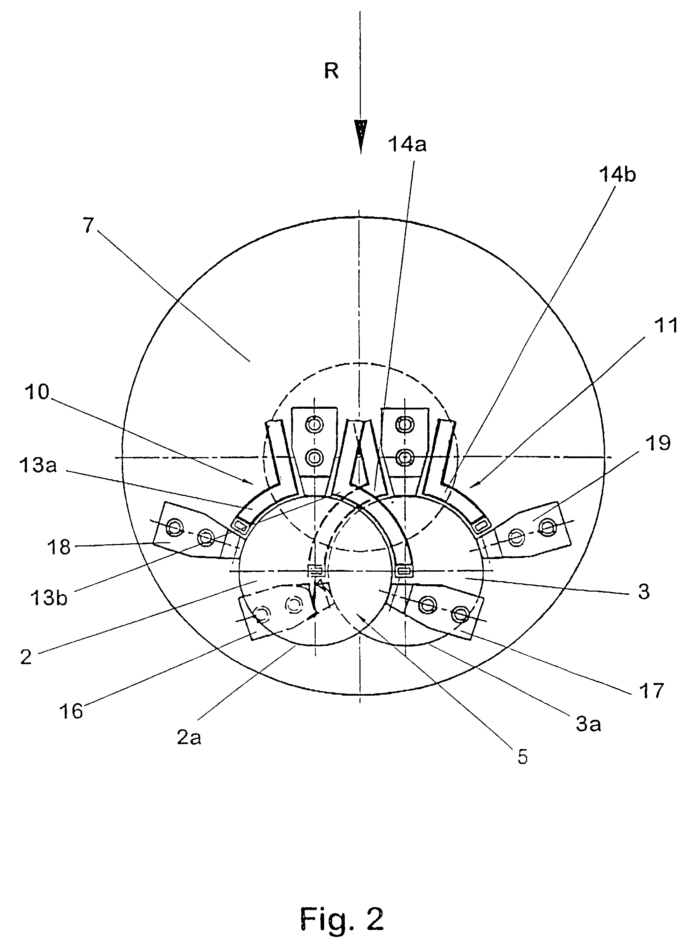

- Fig. 2: die Betriebsstellung der Kurbelwelle nach Fig. 1 in einer frontalen Ansicht entlang der Schnittlinie I - I der Fig. 1;
- Fig. 3: Verschiedene Betriebsstellungen der Kurbelwelle während eines Umlaufes in einer vereinfachten der Ansicht nach Fig. 2 entsprechenden Ansicht.

Die in den Figuren gezeigte Kurbelwelle 1 weist einen gegenüber ihrer Drehachse D versetzt angeordneten ersten Hubzapfen 2 mit einer Lagerfläche 2a auf. Der erste Hubzapfen 2 grenzt unmittelbar an einen eine Lagerfläche 3a aufweisenden zweiten Hubzapfen 3, der ebenfalls exzentrisch gegenüber der Drehachse D der Kurbelwelle 1 und zusätzlich versetzt gegenüber dem ersten Hubzapfen 2 angeordnet ist. Zwischen den Hubzapfen 2, 3 ist ein Überdeckungsbereich 5 ausgebildet, in dem die Hubzapfens 3, 2 in einander übergehen. Die Lagerflächen 2a, 3a grenzen mit ihrem dem Überdeckungsbereich 5 gegenüberliegenden Rand 2b, 3b an jeweils eine Wange 6, 7, welche bei einer annähernd gleichen Dicke einen gegenüber dem Durchmesser der Hubzapfen 2, 3 erheblich größeren Durchmesser aufweisen.

Zum Erwärmen der Lagerflächen 2a, 3a der Hubzapfen 2, 3 sind in Induktoren 10,11 aus derselben Richtung von oben auf die Hubzapfen 2,3 aufgesetzt worden, wobei jeweils einer der Induktoren 10, 11 einer der Lagerflächen 2a, 3a zugeordnet ist. Die Induktoren 10, 11 weisen jeweils zwei die jeweilige Lagerfläche 2a, 3a aus derselben Richtung R umgreifende Induktoräste 12, 13, 14, 15 auf, die jeweils in Teiläste 12a, 12b, 13a, 13b, 14a, 14b, 15a, 15b geteilt sind. Jeweils einer der Induktoräste 12, 14 der Induktoren 10, 11 ist dem Überdeckungsbereich 5 zugeordnet, während der jeweils andere Induktorast 13, 15 dem anderen, den Wangen 6 bzw. 7 zugeordneten Randbereich 2b,3b der Lagerfläche 2a, 3a zugeordnet ist.

Die Induktoräste 12, 13 bzw. 14, 15 umgreifen mit ihrem ersten Teilstück 12b, 13b bzw. 14a, 15a die ihnen zugeordnete Lagerfläche 2 bzw. 3 um annähernd 90° während sie mit ihrem jeweils anderen Teilstück 12a, 13a bzw. 14b, 15b die Lagerfläche 2a bzw. 3a jeweils über einen kleineren Winkelbereich umgreifen. An jedem freien Ende der Induktorast-Teilstücke 12a, 12b, 13a, 13b, 14a, 14b, 15a, 15b sind Gleitschuhe 16, 17, 18, 19 angeordnet. Zusätzlich ist zentral zwischen den Teilstücken 12a, 12b, 13a, 13b, 14a, 14b, 15a, 15b ein Gleitschuhpaar 20, 21 angeordnet. Die Teilstücke 12a, 13a bzw. 12b, 13b der Induktorenäste 12, 13 und die Teilstücke 14a, 15a bzw. 14b, 15b der Induktoräste 14, 15 sind jeweils elektrisch leitend miteinander über Verbindungsäste 22, 24 bzw. 25, 23 verbunden.

Die Teilstücke 12b, 14a der jeweils dem Überdeckungsbereich 5 zugeordneten Induktoräste 12, 14 der Induktoren 10, 11 weisen jeweils einen Abschnitt 12c, 14c auf, der mit einem Abstand A von dem jeweils anderen Induktorast 13, 15 angeordnet ist. Der Abstand A ist größer als der Abstand a zwischen den übrigen Abschnitten des jeweiligen Induktorastes 12 bzw. 14 und den jeweils anderen Induktorästen 13,15. Die betreffenden übrigen Abschnitte sind durch den Restabschnitt der Teilstücke 12b, 14a und das jeweils zweite Teilstück 12a, 14b gebildet. Die Abschnitte 12c, 14c der Induktoräste 12, 14 gehen jeweils in einer Schräge in den zu dem jeweils anderen Induktorast 13, 15 enger benachbarten Restabschnitt über.

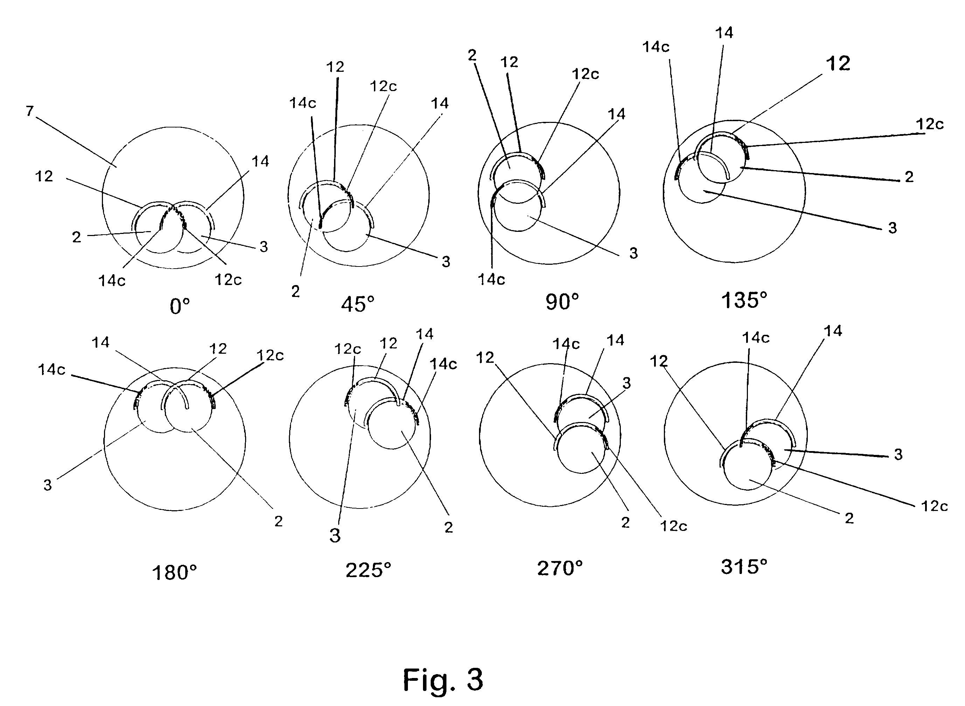

Der Abstand A ist so bemessen, daß die Summe der Abstände A beider Induktoren 10, 11 größer ist als die Gesamtbreite B der Lagerflächen. Durch diese Bemessung des Abstands A überlappen sich die Abschnitte 12c und 14c der Induktoräste 12, 14 in axialer Richtung. Die Grenze, an der die Abschnitte 12c, 14c vergrößerten Abstands A in den Abschnitt kleineren Abstands a übergehen, entspricht der Grenze des Bereichs der Induktoräste 12, 14, der bei einem Umlauf der Kurbelwelle 1 in keiner Umlaufstellung dem ihm entsprechenden Bereich des jeweils anderen Induktors 14, 12 in Achsrichtung der Kurbelwelle 1 gegenübersteht. Die Lage dieser Abschnitte 12c,14c wird an Fig. 3 verdeutlicht, aus der ersichtlich ist, daß die schraffiert dargestellten Abschnitte 12c, 14c vergrößerten Abstands A einander in Achsrichtung der Kurbelwelle 1 gesehen in keiner Stellung eines Kurbelumlaufs unmittelbar axial gegenüberstehen.

Im Unterschied zu den Teilstücken 12b, 13a, 13b der Induktoräste 12, 13 des Induktors 10 bzw. den Teilstücken 14a, 15a, 15b der Induktoräste 14, 15 des Induktors 11 sind die Teilstücke 12a, 14b der Induktoräste 12, 14 unbeblecht ausgeführt, so daß sie bei der Erwärmung der Lagerflächen 2a, 3a annähernd wirkungslos sind. Auf diese Weise wird eine Überhitzung der an den Überdeckungsbereich 5 angrenzenden Zonen der hubzapfen 2, 5 vermieden.

Gleichzeitig wird dadurch, daß die hinsichtlich der Erwärmung wirksame Länge der jeweils den Wangen 6, 7 zugeordneten Induktoräste 13, 15 länger sind als die im Überdeckungsbereich 5 wirksamen Induktoräste 12b,14a der höhere Wärmeabfluß im Übergangsbereich zwischen den Wangen 6, 7 und den an sie angrenzenden Hubzapfen 2 bzw. 3 kompensiert.

Alternativ zu der in den Figuren gezeigten Ausführungen kann das Teilstück 12a bzw. 14b auch direkt mit dem äußeren Ende des ihm benachbarten Teilstück 13a bzw. 15b des dem Randbereich der Lagerfläche 2a, 3a zugeordneten Induktorastes 13, 15 verbunden werden. Möglich ist es auch, das Teilstück 12a bzw. 14b der dem Überdeckungsbereich 5 zugeordneten Induktoren 12, 14 ganz entfallen zu lassen und den dem Überdeckungsbereich 5 zugeordneten Induktor 12 bzw. 14 lediglich über die Länge des Abschnittes 12c bzw. 14c vergrößerten Abstands A auszubilden.

## Patentansprüche

1. Vorrichtung zum umlaufenden und gleichzeitig erfolgenden elektroinduktiven Härten der Lagerflächen (2a;3a) von unmittelbar nebeneinander und in Achsrichtung (D) versetzt zueinander angeordneten Hubzapfen (2;3) einer Kurbelwelle (1) mit die Hubzapfen (2;3) jeweils um höchsten 180° umgreifenden Induktoren (10;11), welche jeweils mindestens zwei parallel angeordnete, der Krümmung der Lagerflächen (2a;3a) folgende Induktoräste (12,13;14,15) aufweisen, von denen einer dem Überdeckungsbereich (5) der Hubzapfen (2;3) und der andere dem jeweils anderen Randbereich (2b;3b) des ihm zugeordneten Hubzapfens (2;3) zugeordnet ist, wobei die Induktoräste (12,13;14,15) jedes Induktors (10;11) in Achsrichtung (D) einen gegenüber der Hälfte der Gesamtbreite (B) der Hubzapfen (2;3) vergrößerten Abstand (A) voneinander aufweisen, **dadurch gekennzeichnet,**
- daß die Induktoren (10;11) die Hubzapfen (2;3) im wesentlichen aus der selben Richtung (R) umgreifen und
- daß der Bereich vergrößerten Abstands (A) der Induktoräste (12,13;14,15) jedes Induktors (10;11) jeweils auf denjenigen Abschnitt (12c;14c) des dem Überdeckungsbereich (5) zugeordneten Induktorastes (12;14) beschränkt ist, der den entsprechenden Abschnitt (14c;12c) des dem Überdeckungsbereich (5) zugeordneten Induktorastes (14;12) des jeweils anderen Induktors (11;10) in keiner Umlaufstellung der Kurbelwelle (1) durchdringt.

2. Vorrichtung nach Anspruch 1, **dadurch gekennzeichnet, daß** der dem Überdeckungsbereich (5) zugeordnete Induktorast (12;14) eine geringere Länge aufweist, als der andere Induktorast (13;15) der Induktoren (10;11).

3. Vorrichtung nach einem der voranstehenden Ansprüche, **dadurch gekennzeichnet, daß** der dem Überdeckungsbereich (5) zugeordnete Induktorast (12;14) in dem Bereich, in dem er einen geringeren Abstand (a) zu dem anderen Induktorast (13;15) des Induktors (10;11) aufweist, annähernd wirkungslos ist.

4. Vorrichtung nach einem der Ansprüche 1 oder 2, **dadurch gekennzeichnet, daß** der dem Überdeckungsbereich (5) zugeordnete Induktorast (12;14) im wesentlichen nur in dem Abschnitt (12c;14c) vergrößerten Abstands (A) ausgebildet ist.

5. Vorrichtung nach einem der voranstehenden Ansprüche, **dadurch gekennzeichnet, daß** der Abschnitt (12c;14c) des dem Überdeckungsbereich (5) zugeordneten Induktorastes (12;14) mit vergrößertem Abstand (A) ein größere Länge aufweist als sein anderer Abschnitt.

6. Vorrichtung nach einem der voranstehenden Ansprüche, **dadurch gekennzeichnet, daß** jedem freien Ende der Induktoräste (12,13;14,15) ein Gleitschuh (18;19) oder ein Gleitschuhpaar zugeordnet ist.

7. Vorrichtung nach einem der voranstehenden Ansprüche, **dadurch gekennzeichnet, daß** mindestens ein Induktorast (12,13;14,15) der Induktoren (10;11) geteilt ist.

8. Vorrichtung nach Anspruch 7, **dadurch gekennzeichnet**, **daß** zwischen den Teilabsschnitten (12a,12b,13a,13b;14a,b) der Induktoren (10;11) mindestens ein Gleitschuh (20) angeordnet ist.

## Claims

1. A device for the rotational and simultaneous electro-inductive hardening of the bearing faces (2a;3a) of crankpins (2;3) of a crankshaft (1) which are disposed immediately one beside the other and offset in relation to one another in the axial direction (D), having inductors (10;11) which each engage around the crankpins (2;3) by 180° and each have at least two parallel inductor branches (12, 13; 14, 15) which follow the curvature of the bearing faces (2a;3a) and of which one is associated with the registration zone (5) of the crankpins (2;3), the other one being associated with the other marginal zone (2b;3b) of the associated crankpin (2;3), the inductor branches (12, 13; 14, 15) of each inductor (10;11) having in the axial direction (D) a distance (A) from one another which is larger than half the total width (B) of the crankpins (2;3), **characterised in that**
- the inductors (10;11) engage around the crankpins (2;3)substantially from the same direction (R), and
- each zone of increased distance (A) of the inductor branches (12, 13; 14, 15) of each inductor (10;11) is limited to that portion (12c;14c) of the inductor branch (12;14) associated with the registration zone (5) which does not penetrate the corresponding portion (14c;12c) of the inductor branch (14;12) of the other inductor (11;10) associated with the registration zone (5) in any rotational positional of the crankshaft.

2. A device according to claim 1, **characterised in that** the inductor branch (12;14) associated with the registration zone (5) has a shorter length than the other inductor branch (13;15) of the inductors (10;11).

3. A device according to one of the preceding claims, **characterised in that** the inductor branch (12;14) associated with the registration zone (5) is substantially inoperative in the zone in which it is at a smaller distance (a) from the other inductor branch (13;15) of the inductor (10;11).

4. A device according to one of claims 1 or 2, **characterised in that** the inductor branch (12;14) associated with the registration zone (5) is constructed substantially only in the portion (12c;14c) of increased distance (A).

5. A device according to one of the preceding claims, **characterised in that** the portion (12c;14c) of that inductor branch (12;14) associated with the registration zone (5) which has a greater distance (A) has a greater length than its other portion.

6. A device according to one of the preceding claims, **characterised in that** a glide shoe (18;19) or a pair of glide shoes is/are associated with each free end of the inductor branches (12, 13; 14,15).

7. A device according to one of the preceding claims, **characterised in that** at least one inductor branch (12, 13;14, 15) of the inductors (10;11) is divided.

8. A device according to claim 7, **characterised in that** at least one glide shoe (20) is disposed between the component portions (12a,12b,13a,13b; 14a, b) of the inductors (10;11).

## Revendications

1. Dispositif de trempe par induction électrique des surfaces de palier (2a ; 3a) de manetons (2 ; 3) d'un vilebrequin (1) situés directement l'un à côté de l'autre et décalés l'un par rapport à l'autre suivant la direction axiale (D), effectué en rotation et simultanément, au moyen d'inducteurs (10 ; 11) qui entourent les manetons (2 ; 3) chacun respectivement sur au maximum 180° et qui comprennent chacun au moins deux branches d'inducteur (12, 13 ; 14, 15) qui sont disposées d'une manière parallèle et suivent la courbure des surfaces de palier (2a ; 3a) et dont l'une est associée à la zone de recouvrement (5) des manetons (2 ; 3) et la seconde à l'autre zone marginale respective (2b ; 3b) du maneton (2 ; 3) qui lui est associé, les branches d'inducteur (12, 13 ; 14, 15) de chaque inducteur (10 ; 11) présentant l'une vis-à-vis de l'autre, suivant la direction axiale (D), une distance (A) qui est plus grande que la moitié de la largeur totale (B) des manetons (2 ; 3),
caractérisé en ce que
- les inducteurs (10 ; 11) entourent les manetons (2 ; 3) essentiellement à partir de la même direction (R) et
- la zone de distance plus grande (A) des branches d'inducteur (12, 13 ; 14, 15) de chaque inducteur (10 ; 11) est limitée, pour chacun, à la section (12c ; 14c) de la branche d'inducteur (12 ; 14) associée à la zone de recouvrement (5) qui, en aucune position du mouvement de révolution du vilebrequin (1), ne traverse pas la section correspondante (14c ; 12c) de la branche d'inducteur (14 ; 12), associée à la zone de recouvrement (5), de l'autre inducteur (11 ; 10).

2. Dispositif suivant la revendication 1, caractérisé en ce que la branche d'inducteur (12 ; 14) associée à la zone de recouvrement (5) a une longueur plus faible que l'autre branche d'inducteur (13 ; 15) des inducteurs (10 ; 11) .

3. Dispositif suivant l'une des revendications précédentes, caractérisé en ce que la branche d'inducteur (12 ; 14) associée à la zone de recouvrement (5) est approximativement sans effet dans la zone dans laquelle elle comporte une distance (a) plus faible que l'autre branche d'inducteur (13 ; 15) de l'inducteur (10 ; 11).

4. Dispositif suivant l'une des revendications 1 ou 2, caractérisé en ce que la branche d'inducteur (12 ; 14) associée à la zone de recouvrement (5) n'est essentiellement située que dans la section (12c ; 14c) à distance (A) plus grande.

5. Dispositif suivant l'une des revendications précédentes, caractérisé en ce que la section (12c ; 14c) de la branche d'inducteur (12 ; 14) associée à la zone de recouvrement (5) qui comporte une distance (A) plus grande a une longueur plus grande que son autre section.

6. Dispositif suivant l'une des revendications précédentes, caractérisé en ce qu'un patin de glissement (18 ; 19) ou une paire de patins de glissement est associé à chaque extrémité libre des branches d'inducteur (12, 13 ; 14, 15).

7. Dispositif suivant l'une des revendications précédentes, caractérisé en ce qu'au moins une branche d'inducteur (12, 13 ; 14, 15) des inducteurs (10 ; 11) est divisée en parties.

8. Dispositif suivant la revendication 7, caractérisé en ce qu'au moins un patin de glissement (20) est disposé entre les sections formant parties (12a, 12b, 13a, 13b ; 14a, 14b) des inducteurs (10 ; 11).
